# EUROPÄISCHE PATENTSCHRIFT

(11) **EP 3 427 590 B1**
(45) Veröffentlichungstag und Bekanntmachung des Hinweises auf die Patenterteilung: **17.02.2021**
(21) Anmeldenummer: 17763642.0
(22) Anmeldetag: 27.02.2017
(51) Int. Cl.: A22C 13/00, A22C 11/00

(54) **HÜLLE FÜR WURSTPRODUKTE**
CASING FOR SAUSAGE PRODUCTS
BOYAU POUR ARTICLES DE TYPE SAUCISSON

(30) Priorität: 11.03.2016 RU 2016108746
(43) Veröffentlichungstag der Anmeldung: 16.01.2019
(73) Patentinhaber: Elizbaryan, Levon Semenovich, Moscow 127434 (RU)
(72) Erfinder: Elizbaryan, Levon Semenovich, Moscow 127434 (RU)
(74) Vertreter: Godemeyer Blum Lenze Patentanwälte Partnerschaft mbB - werkpatent
(86) Internationale Anmeldenummer: PCT/RU2017/000094
(87) Internationale Veröffentlichungsnummer: WO 2017/155427

(56) Entgegenhaltungen:
- RU-C1- 2 444 899
- RU-C1- 2 444 899
- RU-U1- 116 752
- RU-U1- 116 752

## Beschreibung

### Technik

Die vorliegende Erfindung bezieht sich auf die bei der Herstellung von Wurstwaren eingesetzten Verpackungen, nämlich auf darmartige Wursthüllen.

### Bisheriger Stand der Technik

Wursthüllen sind sowohl zu Aufbewahrung von Wurstwaren und deren Schutz vor äußeren Einwirkungen eingesetzte Verpackungen, als auch Teil eines auf die Gewährleistung einer bestimmten Form des Produkts ausgerichteten Verfahrens.

Beim Einfüllen der Hülle ermöglicht das Abbinden von fertigen Wurstwaren eine Minderung des vom eingefüllten Nahrungsmittel auf die Hülle ausgeübten Innendrucks, wodurch das Risiko einer Zerstörung der Hülle bei der darauffolgenden Wurstverarbeitung reduziert werden kann.

Es ist bereits ein Verfahren zum Abbinden von Einzelwürsten mit einer Schnur bekannt (Statsko V.P. Würste und Fleischwaren. Phönix-Verlag, 2000, Seiten 122-125), bei dem die Außenfläche einer Wurst manuell mit einer Schnur abgebunden wird, wobei zum Binden von Schlaufen und Knoten bestimmte Handgriffe angewandt werden.

Es ist bereits eine aus natürlichem oder künstlichem Filmmaterial hergestellte abgebundene Wursthülle bekannt, deren Bestandteil spiralförmig rund um die Hülle angeordnete abbindende Elemente sind, die auf der Hüllenaußenfläche befestigt werden, und sich über die gesamte Länge der Hülle erstrecken (Russisches Patent Nr126570, MPK A22C 13/00, Patentveröffentlichung 2013).

Es ist eine Wursthülle bekannt, auf deren Außenfläche diese Hülle abbindende Elemente befestigt sind, die spiralförmig rund um die Hülle angeordnet werden und bei jeder Spiralwindung längslaufende und sich parallel zur Achse der Hülle befindende Bereiche bilden.
Die längslaufenden Bereiche der sich auf den nächstliegenden Spiralwindungen in einer Längslinie befindenden abbindenden Elemente, sind mit einander verbunden, wobei auf der der Hüllenaußenfläche längslaufende Elemente ausgebildet werden. Jedes dieser längslaufenden Elemente besteht aus fortlaufend miteinander verbundenen längslaufenden Bereichen sämtlicher spiralförmig angeordneter abbindender Elemente (Russisches Patent Nr. 116752, MPK A22C 13/00, Patentveröffentlichung 2012 - nächster Stand der Technik).

### Offenbahrung der Erfindung

Ziel der Erfindung ist eine Erweiterung der bei der Herstellung von Wurstwaren, nämlich bei der Fertigung von Wursthüllen eingesetzten technischen Möglichkeiten.

Die Umsetzung der angegebenen Bestimmung ist Voraussetzung für das entsprechende technische Ergebnis.

Der Grundgedanke der vorliegenden Erfindung ist folgender.

Teil der Wursthülle sind abbindende Elemente, welche spiralförmig auf der Außenfläche der Hülle angeordnet sind und bei jeder Spiralwindung längslaufende und sich parallel zur Hüllenachse befindende Bereiche bilden. Die längslaufenden Bereiche der sich in einer Längslinie befindenden abbindenden Elemente, sind mit einander verbunden, wobei auf der Hüllenaußenfläche längslaufende Elemente ausgebildet werden, jeder von denen aus den längslaufenden Bereichen eines abbindenden Elements ausgebildet wird.

Die abbindenden Elemente können aus natürlichen, chemischen, synthetischen, oder künstlichen Garnen, sowie deren Kombinationen ausgeführt werden.

Jedes abbindende Element besteht mindestens aus einem Garnfaden.

Die abbindenden Elemente können aus elastischen Garnen gefertigt werden.

Die abbindenden Elemente können aus mindestens zwei Filamentgarnen ausgeführt werden, die aus zwei miteinander verbundenen Einzelfäden bestehen.

Einer der Einzelfäden im Filamentgarn ist ein hochelastisches Garn, während der andere Faden aus undehnbaren bzw. dehnungsarmen Filamenten ausgeführt ist.

Die abbindenden Elemente können als Schnur, Strang, Kordel oder Bindfaden ausgeführt sein. Die abbindenden Elemente können farblich unterschiedlich ausgeführt sein.

Die abbindenden Elemente sind mit der Hüllenaußenfläche verklebt.

### Optimale Erfindungsumsetzung

Die vorliegende Zeichnung ist die schematische Darstellung eines Teils einer abgebundenen Wursthülle.

Die Wursthülle ist aus natürlichem oder künstlichem Folienmaterial ausgeführt 1, auf dessen Außenfläche in gesamter Länge mittels Verklebung abbindende Elemente 2, 3, 4, befestigt werden, die in einem vorgegebenen Abstand voneinander spiralförmig auf der Außenoberfläche der Hülle angeordnet sind.

Jedes abbindende Element 2, 3, 4, schließt auf jeder Spiralumwindung längslaufende Bereiche 5, 6, 7, mit ein, die parallel der Hüllenachse angeordnet sind.

Die längslaufende Bereiche 5, 6, 7 eines jeden abbindenden Elements 2, 3, 4, die auf den nächstliegenden Spiralumwindungen angeordnet sind, werden untereinander zu entlang der Hüllenaußenfläche verlaufenden Elementen 8, 9, 10 verbunden.

Demgemäß, besteht jedes längslaufende Element ausschließlich aus den längslaufenden Bereichen eines abbindenden Elements. So besteht das längslaufende Element 8 aus den längslaufenden Bereichen 5 des abbindenden Elements 2, das längslaufende Element 9 besteht aus den längslaufenden Bereichen 6 des abbindenden Elements 3, das längslaufende Element 10 besteht aus den längslaufenden Bereichen 7 des abbindenden Elements 4.

### Gewerbliche Anwendbarkeit

Das Abbinden, das befestigen des abbindenden Elements auf der Hülle (Verkleben), sowie das Trocknen eines Fertigprodukts findet maschinenmässig innerhalb eines entsprechenden Verfahrens statt, wobei die Hülle durch eine Abbindevorrichtung gezogen wird. Dabei können sämtliche Verfahrensschritte sowohl mit einer durch die Abbindevorrichtung gezogenen gefalteten Hülle (flaches Band), als auch mit einer Schlauchförmigen (umfängliche Zylinderform) Hülle vollzogen werden.

Die erfindungsgemäße Ausführung einer abgebundenen Hülle trägt zur Erweiterung von den, bei der Herstellung von Wurstwaren, nämlich bei der Fertigung von Wursthüllen eingesetzten technischen Möglichkeiten bei.

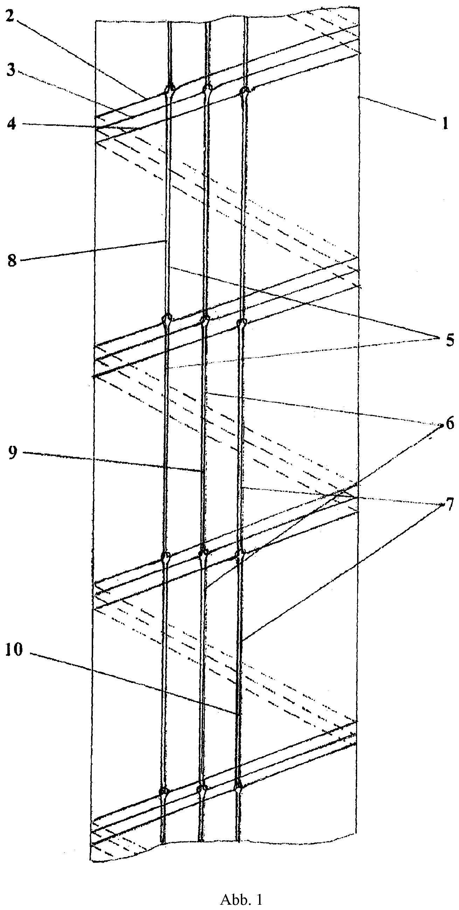

## Patentansprüche

1. Eine Wursthülle mit abbindenden Elementen, die spiralförmig auf der Hüllenoberfläche angeordnet sind und bei jeder Spiralumwindung längslaufende Bereiche bilden, welche parallel zur Hüllenachse angeordnet sind, **dadurch gekennzeichnet, dass** die lateral angeordneten längslaufenden Bereiche der abbindenden Elemente miteinander verbunden sind und auf der Hüllenaußenfläche längslaufende Elemente ausbilden, jeder von denen durch die längslaufenden Bereiche eines abbindenden Elements ausgebildet wird.

2. Die Hülle nach Anspruch 1 **dadurch gekennzeichnet, dass** ein abbindendes Element aus natürlichen, chemischen, synthetischen, oder künstlichen Garnen, sowie deren Kombinationen ausgeführt ist.

3. Die Hülle nach Anspruch 1 **dadurch gekennzeichnet, dass** jedes abbindende Element aus mindestens einem Garn ausgeführt ist.

4. Die Hülle nach Anspruch 1 **dadurch gekennzeichnet, dass** ein abbindendes Element aus elastischen Garnen ausgeführt ist.

5. Die Hülle nach Anspruch 1 **dadurch gekennzeichnet, dass** ein abbindendes Element aus mindestens zwei Filamentgarnen ausgeführt ist, wobei jedes dieser Garne aus zwei miteinander verbundenen Einzelfäden besteht.

6. Die Hülle nach Anspruch 5 **dadurch gekennzeichnet, dass** einer der beiden Einzelfäden aus dem Filamentgarn ein hochelastischer Faden ist, während der andere Faden aus undehnbaren bzw. dehnungsarmen Filamenten ausgeführt ist.

7. Die Hülle nach Anspruch 1 **dadurch gekennzeichnet, dass** ein abbindendes Element als Schnur, Strang, Kordel oder Bindfaden ausgeführt ist.

8. Die Hülle nach Anspruch 1 **dadurch gekennzeichnet, dass** die abbindenden Elemente farblich unterschiedlich ausgeführt sind.

9. Die Hülle nach jedem der Ansprüche 1-8 **dadurch gekennzeichnet, dass** ein abbindendes Element mit der Hüllenaußenfläche verklebt ist.

## Claims

1. A sausage casing with binding elements, spirally arranged on the surface of the casing and forming, with each turn of the spiral, longitudinal sections that are arranged in parallel to the casing axis, **characterized in that** the laterally arranged longitudinal sections of the binding elements are interconnected and form longitudinal elements on the outside of the casing surface, each of which being formed by the longitudinal sections of a binding element.

2. The casing according to claim 1, **characterized in that** a binding element is made of natural, chemical, synthetic or artificial yarns, and a combination thereof.

3. The casing according to claim 1, **characterized in that** each binding element is made of at least one yarn.

4. The casing according to claim 1, **characterized in that** a binding element is made of elastic yarns.

5. The casing according to claim 1, **characterized in that** a binding element is made of at least two filament yarns, each of these yarns consisting of two interconnected individual threads.

6. The casing according to claim 5, **characterized in that** one of the two individual threads made of said filament yarn is a high-elastic thread, whereas the other thread is made of inelastic or low-elastic filaments.

7. The casing according to claim 1, **characterized in that** a binding element is embodied as a string, strand, cord or twine.

8. The casing according to claim 1, **characterized in that** the binding elements are of different colors.

9. The casing according to any one of claims 1 to 8, **characterized in that** a binding element is adhesively bonded to the outer surface of the casing.

## Revendications

1. Boyau à saucisse comprenant des éléments durcissants, qui sont disposés en forme de spirale sur la surface du boyau et qui forment lors de chaque enroulement en spirale des zones s'étendant longitudinalement, lesquelles sont disposées parallèlement à l'axe du boyau, **caractérisé en ce que** les zones s'étendant longitudinalement des éléments durcissants disposées latéralement sont reliées entre elles et forment sur la surface externe du boyau des éléments s'étendant longitudinalement, chacun d'entre eux est formé par les zones s'étendant longitudinalement d'un élément durcissant.

2. Boyau selon la revendication 1 **caractérisé en ce qu'**un élément durcissant est réalisé en fils naturels, chimiques, synthétiques ou artificiels, ainsi qu'en leurs combinaisons.

3. Boyau selon la revendication 1 **caractérisé en ce que** chaque élément durcissant est réalisé en au moins un fil.

4. Boyau selon la revendication 1 **caractérisé en ce qu'**un élément durcissant est réalisé en fils élastiques.

5. Boyau selon la revendication 1 **caractérisé en ce qu'**un élément durcissant est réalisé en au moins deux fils continus, chacun de ces fils se composant de deux fils élémentaires reliés entre eux.

6. Boyau selon la revendication 5 **caractérisé en ce qu'**un des deux fils élémentaires du fil continu est un fil hautement élastique, tandis que l'autre fil est réalisé à partir de filaments inextensibles ou résistant à la distension.

7. Boyau selon la revendication 1 **caractérisé en ce qu'**un élément durcissant est réalisé en tant que cordelette, cordon, corde ou ficelle.

8. Boyau selon la revendication 1 **caractérisé en ce que** les éléments durcissants sont réalisés dans des couleurs différentes.

9. Boyau selon l'une quelconque des revendications 1-8 **caractérisé en ce qu'**un élément durcissant est collé à la surface externe du boyau.
